Europäisches Patentamt

European Patent Office

Office européen des brevets

(19)

(11) **EP 1 482 584 A1**

(12) **EUROPEAN PATENT APPLICATION**
published in accordance with Art. 158(3) EPC

(43) Date of publication:
**01.12.2004 Bulletin 2004/49**

(51) Int Cl.⁷: $H01M\ 4/86$, $H01M\ 8/12$

(21) Application number: **03707135.4**

(22) Date of filing: **27.02.2003**

(86) International application number:
**PCT/JP2003/002201**

(87) International publication number:
**WO 2003/075378 (12.09.2003 Gazette 2003/37)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **04.03.2002 JP 2002057062**

(71) Applicants:
• **Mitsubishi Materials Corporation
Chiyoda-ku, Tokyo 100-004 (JP)**
• **The Kansai Electronic Power Co., Inc.
Osaka-shi, Osaka 530-0005 (JP)**

(72) Inventors:
• **Komada, N., Central Res. Inst. Naka Res. Ctr
Nakacho, Naka-gun (JP)**
• **Hoshino, Koji, Central Res. Inst. NakaRes. Ctr.
Nakacho, Naka-gun (JP)**

• **Adachi, K., Central Res. Inst. Naka Res. Ctr.
Nakacho, Naka-gu (JP)**
• **Hosoi, Kei, Central Res. Inst. Naka Res. Ctr.
Nakacho, Naka gun (JP)**
• **Inagaki, Toru, The Kansai Electric Power Co., Inc
Osaka-shi, Osaka 530-0005 (JP)**
• **Yoshida, H., The Kansai Electric Power Co., Inc.
Osaka-shi, Osaka 530-0005 (JP)**
• **Sasaki, T., The Kansai Electric Power Co., Inc.
Osaka-shi, Osaka 530-0005 (JP)**

(74) Representative: **Klingseisen, Franz, Dipl.-Ing.
Patentanwälte,
Dr. F. Zumstein,
Dipl.-Ing. F. Klingseisen,
Postfach 10 15 61
80089 München (DE)**

(54) **ELECTRODE FOR SOLID OXIDE TYPE FUEL CELL AND SOLID OXIDE TYPE FUEL CELL**

(57)     An electrode of a solid oxide fuel cell has a skeleton (11) constituted of a porous sintered compact having a three dimensional network structure, the porous sintered compact being made of an oxide ion conducting material and/or a mixed oxide ion conducting material; grains (12) made of an electron conducting material and/or a mixed oxide ion conducting material are adhered onto the surface of the skeleton; and the grains are baked inside the voids (13) of the porous sintered compact under the conditions such that the grains are filled inside the voids. The electrode drastically improves the electrode properties and alleviates the thermal shock and the thermal strain to a great extent. It is preferable that the electrode is used in the form such that the electrode is formed to be integrated with the electrolyte on one surface or on both surfaces of an oxide ion conducting, dense solid electrolyte layer.

FIG. 1

## Description

Technical Field

The present invention relates to an electrode of a solid oxide fuel cell (SOFC) and a solid oxide fuel cell using the electrode.

Background Art

The SOFC is broadly classified into the tubular type and the planar type; the planar type includes the bipolar type and the monolithic (single piece) type, and both types have a laminate structure in which a solid electrolyte made of an oxide ion conductor is sandwiched by an air electrode (cathode) and a fuel electrode (anode). Single cells made up of this laminate structure are connected to each other through interconnects (separators), and distributors for supplying gas are interposed according to need between the electrodes and the interconnects, or the interconnects are provided with a distributor structure.

In a SOFC, oxygen (air) is supplied to the air electrode section and a fuel gas ($H_2$, CO, $CH_4$ and the like) is supplied to the fuel electrode section. The oxygen supplied to the air electrode section passes through the air electrode and comes close to the interface with the solid electrolyte layer, and there, the oxygen receives electrons from the air electrode to be ionized into oxide ions ($O^{2-}$). The generated oxide ions move into the solid electrolyte by diffusion toward the fuel electrode, react with the fuel gas at the boundary with the fuel electrode to produce reaction products ($H_2O$, $CO_2$ and the like), releasing electrons to the fuel electrode. These electrons are taken out as electricity to the outside.

The electrode reaction in the SOFC, for example, the ionization reaction of the molecular oxygen to the oxide ion ( $(1/2)O_2 + 2e- \rightarrow O^{2-}$) taking place in the air electrode section involves three components, namely, molecular oxygen, electron and the oxide ion; thus, it is generally believed that the reaction can take place merely in the three-phase boundary between (1) the solid electrolyte carrying the oxide ions, (2) the air electrode carrying electrons and (3) the gas phase (air) supplying oxygen molecules. Also in the fuel electrode section, the electrode reaction takes place in the three-phase boundary between the solid electrolyte, the fuel electrode and the fuel gas. Accordingly, it is conceivable that the extension of the three-phase boundary (this is one dimensional in nature, and more accurately can be referred to as a "three-phase boundary length") is favorable for the enhancement of the electrode reactions.

It is required that the solid electrolyte material has a high oxide ion conductivity, and is chemically stable and strong against thermal shock under the conditions involving the oxidizing atmosphere in the air electrode section and the redusing atmosphere in the fuel electrode section; it is the yttria stabilized zirconia (YSZ) that has hitherto been utilized as a solid electrolyte material which can meet such requirements.

On the other hand, the air electrode and fuel electrode both need to be formed of materials having high electronic conductivity. Because the air electrode material is required to be chemically stable in the oxidizing atmosphere of high temperatures around $1000°C$, metals are unsuitable for the air electrode, but perovskite type oxide materials having electronic conductivity are suitable. Examples of such materials include $LaMnO_3$, $LaCoO_3$, $SmCoO_3$ and $PrCoO_3$, and additionally, the solid solutions in which La, Sm or Pr in these materials are partially replaced with Sr, Ca and the like; mainly used are $LaMnO_3$ and its solid solution close to YSZ in thermal expansion coefficient. The fuel electrode material is generally a metal such as Ni and Co, or a cermet such as Ni-YSZ or Co-YSZ. Incidentally, the metals such as Ni take a form of oxide such as NiO at the time of production thereof, but are reduced into metal at the time of operation of the fuel cell.

Because the solid electrolyte is the medium for migration of the oxide ions and also functions as a partition wall for preventing the direct contact of the fuel gas with air, the solid electrolyte is made to have a dense layer capable of blocking gas permeation. On the other hand, the electrodes (the air electrode and the fuel electrode) are made to be porous layers so that gases may permeate the layers. Each layer is formed by the thermal spraying method, the electrochemical vapor deposition (EVD) method, a sheet forming method using slurry, the screen printing method and the like.

As described above, the electrodes (the air electrode and the fuel electrode) of a SOFC are required to be porous and to have a long three-phase boundary length. For the purpose of increasing the three-phase boundary length, Japanese Patent Laid-Open No. 1-227362 proposes to conduct a grain size control in such a way that fine grains are located in the portions, in contact with the electrolyte, of the electrode layers, and coarse grains are located in the other portions. Additionally, it has been known that when the sheet forming method is applied, an organic powder (solid at room temperature) to be thermally decomposed and removed at the time of sintering is added as a pore forming material, and the porosity of an electrode can be increased (See, for example, Japanese Patent Laid-Open No. 6-251772 and Japanese Patent Laid-Open No. 6-206781).

Furthermore, many patent gazettes including Japanese Patent Laid-Open No. 2-278663 describe the adoption of the graded composition in which the composition variation in the interface between an electrolyte and an electrode is employed, mainly for the purpose of avoiding the sharp variation of the thermal expansion coefficient in the interface.

However, the conventional control of the porosities of SOFC electrodes by means of the grain size control of electrode materials or the addition of organic powders as pore forming agent cannot increase the three-phase boundary length to a sufficient extent, and accordingly there has been a problem such that the electrode reaction is constrained, the polarization becomes large, and the SOFC output power is degraded.

Additionally, in a conventional SOFC, the electrode materials and the electrolyte material are different from each other, so that the thermal expansion coefficients of these different materials cannot be precisely equalized, and accordingly thermal stain tends to take place. This problem can be alleviated by the above described graded (i.e., gradient) composition in the interface, but the graded composition is not intended to equalize the thermal expansion coefficients, andhence is not a fundamental solution; moreover, the formation of graded composition layers requires substantial labor and cost.

Disclosure of the Invention

The present invention provides electrodes of a solid oxide fuel cell and a solid oxide fuel cell that can overcome such problems as those described above.

For the purpose of overcoming the above described problems, the present inventors have paid attention to a method for fabricating a porous metallic body disclosed in Japanese Patent Laid-Open No. 8-49002, and have attempted to diligently investigate the application of this method for fabricating a porous metallic body to a ceramic material for use in forming the electrodes of a solid oxide fuel cell; consequently, the present inventors have come to invent an electrode, for use in a solid oxide fuel cell, described in Japanese Patent Laid-Open No. 2000-200614. The electrode of the invention of this prior application is constituted with a porous skeleton or matrix (hereinafter "skeleton") having a three dimensional network structure with large specific area and being provided with the grains made of an electrode material adhered on the outside surface of the porous skeleton and the surface of the pores. Consequently, the three-phase boundary length in the electrode is largely increased; the electrode properties are drastically improved; and the porous skeleton of the electrode has an extremely large specific surface area, so that there acts an effect for alleviating the thermal shock and thermal stain, and accordingly the generation of the fracture of the electrode caused by the difference in thermal expansion between the skeleton and the electrolyte can be prevented.

Subsequently, the present inventors have further promoted the investigation for the purpose of further improving the above described electrode properties and thermal shock, and consequently the present inventors have come to perfect the present invention.

More specifically, the present invention provides electrodes of a solid oxide fuel cell, in which the electrode has a skeleton formed of a porous sintered compact having a three dimensional network structure made of an oxide ion conducting material and/or a mixed oxide ion conducting material; the grains made of an electron conducting material and/or the mixed oxide ion conducting material are adhered on the surface of the skeleton; and the grains are baked inside the voids of the porous sintered compact in such a condition that the grains are filled inside the voids.

Preferably, the electrode takes a form in which the electrode is formed on one surface or both surfaces of an oxide ion conducting, dense solid electrolyte layer, integrallywith the electrolyte (in the present specification, these forms are designated respectively as an electrode/electrolyte laminate and an electrode/electrolyte/ electrode laminate).

The present invention provides also a solid oxide fuel cell, in which the fuel cell includes an air electrode and/or a fuel electrode made of an electrode having the above described structure.

Brief Description of the Drawings

FIG. 1 is an enlarged explanatory diagram schematically illustrating the structure of an electrode involved in the present invention;
FIG. 2 is an explanatory diagram illustrating the structure of a solid oxide fuel cell using the electrode involved in the present invention;
FIG. 3 is a sectional view schematically illustrating an example of the structure of an electrochemically active cell using the electrode involved in the present invention;
FIG. 4 is a sectional view schematically illustrating another example of the structure of an electrochemically active cell using the electrode involved in the present invention; and
FIG. 5 is a sectional view schematically illustrating yet another example of the structure of an electrochemically active cell using the electrode involved in the present invention.

Best Mode for Carrying Out the Invention

Description will be made below on the examples of the present invention on the basis of the drawings.

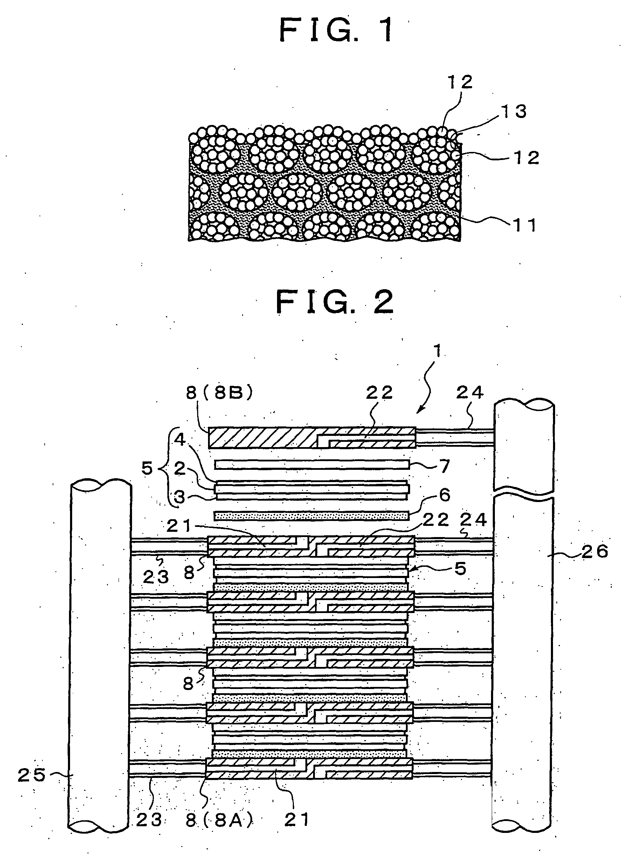

FIG. 1 is an explanatory diagram schematically illustrating the internal structure of an electrode involved in the present invention.

As shown in FIG. 1, the electrode of the present example is provided with a structure in which grains 12 are adhered to a skeleton 11 made of a porous sintered compact having a three dimensional network structure. The skeleton 11 having a three dimensional network structure has large pores 13 (namely the network structure pores) formed by the gas bubble generation caused by liquid evaporation, grains 12 are adhered onto the outside surface of the skeleton 11, and the grains 12 are baked in the interior of the large pores 13 in such a condition that the grains are filled in the interior of the large pores.

Incidentally, the interior of the sintered compact is formed of a collection of the small pores between the grains constituting the skeleton 11; however, in the illustrated example, drawing is simplified and the portion concerned is depicted with dots.

In the above described structure, the outside surface of the skeleton 11 on which the grains 12 are adhered and the large pores 13 in the network structure filled with the grains 12 constitute the electrode surface. Consequently, as compared to the above-described technique of a prior application (see Japanese Patent Laid-Open No. 2000-200614), the surface area of the electrode is increased and hence the three-phase boundary length is drastically increased, so that a further improvement of the electrode properties can be expected. Additionally, the porosity of the skeleton of the electrode materials is extremely large, and accordingly, the effect for alleviating the thermal shock and thermal strain is significant, and the generation of the fracture of the electrode caused by the difference in thermal expansion coefficient between the skeleton and the electrolyte can be prevented.

The skeleton 11 of the electrode offers the path for the oxide ions, communicatively connected to the solid electrolyte, so that the skeleton is required to have a certain level of oxide ion conductivity. Accordingly, as the material for the skeleton, there is used at least one selected from an oxide ion conducting material and a mixed oxide ion conducting material.

On the other hand, the adhered grains 12 offer the path for the electrons necessary for exchanging the oxide ions on the three-phase boundary, so that the adhered grains are required to have a certain level of electronic conductivity. Accordingly, the adhered grains are formed of at least one selected from an electron conducting material and a mixed oxide ion conducting material. Preferably, at least a part of the adhered grains are formed of an electron conducting material. In other words, the adhered grains are formed of either an electron conducting material or a mixture of an electron conducting material and a mixed oxide ion conducting material.

The materials suitable for the skeleton 11 to be cited in the first place are the oxide ion conducting materials which have hitherto been used as the solid electrolytes for use in the solid oxide fuel cell. More specifically, yttria stabilized zirconia (YSZ) having a fluorite crystal structure is one of the typical such materials; however, other oxide ion conducting materials, known to be usable as the solid electrolytes for use in the fuel cell, can also be used.

As oxide ion conducting material having a higher conductivity than YSZ, there can be cited lanthanum gallate based materials having the perovskite crystal structure and the compositions represented by the following formula (1). These materials have suitable properties for solid electrolyte of solid oxide fuel cells, such as a high conductivity even at low temperatures, which enables construction of solid oxide fuel cells operable at a temperature lower than about 1000°C, a typical operating temperature employed heretofore. These materials are also extremely suitable as a material for the skeleton of the electrodes in the present invention.

$$Ln_{1-x}A_xGa_{1-y-z}B1_yB2_zO_3 \qquad (1)$$

where

Ln = one or more of La, Ce, Pr, Nd and Sm, preferably La and/or Nd, more preferably La;
A = one or more of Sr, Ca and Ba, preferably Sr;
B1 = one or more of Mg, Al and In, preferably Mg;
B2 = one or more of Co, Fe, Ni and Cu, preferably Co or Fe, more preferably Co;
$x = 0.05$ to $0.3$, preferably $0.10$ to $0.25$, more preferably $0.17$ to $0.22$;
$y = 0.025$ to $0.29$, preferably $0.025$ to $0.17$, more preferably $0.09$ to $0.13$;
$z = 0.01$ to $0.15$, preferably $0.02$ to $0.15$, more preferably $0.07$ to $0.10$; and
$y + z \leq 0.3$, preferably $y + z = 0.10$ to $0.25$.

When the skeleton is formed of a mixed oxide ion conducting material, as an appropriate material, there can be cited a lanthanum gallate based material having the perovskite crystal structure, represented by the above formula (1) in which Ln, A, B1, B2 and x are the same as described above, and y and z are as follows:

$y = 0$ to $0.29$, preferably $0.025$ to $0.17$, more preferably $0.09$ to $0.13$;
$0.15 < z \leq 0.3$, preferably $0.15 < z \leq 0.25$; and
$y + z \leq 0.3$, preferably $y + z = 0.10$ to $0.25$.

More specifically, a lanthanum gallate based material having a composition represented by the above described formula (1) becomes an oxide ion conductor for the z value of 0.15 or less because the ion transport number is increased, but becomes an mixed oxide ion conductor for the z value exceeding 0.15 because the ion transport number is decreased.

As another mixed oxide ion conductor suitable for the material of the skeleton, here is a material having a perovskite crystal structure represented by the following formula (2):

$$A'_{1-x'}Ca_{x'}Ga_{1-y'}B'_{y'}O_3 \qquad (2)$$

where

A' = one or more lanthanoid metals each having the 8 coordination ionic radius of the trivalent ion ranging from 1.05 to 1.15 Å;
B' = one or more of Co, Fe, Ni and Cu, preferably Co;
x' = 0.05 to 0.3, preferably 0.05 to 0.2; and
y' = 0.05 to 0.3, preferably 0.08 to 0.2.

Examples of the metal represented by A' include Nd, Pr, Sm, Ce, Eu and Gd and the like; among these, Nd is particularly preferable. A material represented by the above described formula (2) can display a further higher conductivity than a material represented by formula (1).

When the electrode is the fuel electrode (anode), it is not preferable that the skeleton is made of the above described mixed oxide ion conductor, because the overall conductivity is degraded in the reducing atmosphere to which the fuel electrode is exposed. When the electrode is the air electrode (cathode), even if the skeleton is made of the mixed oxide ion conductor, there occurs no problem as described above. Accordingly, the material of the skeleton for the air electrode may be an oxide ion conductor, a mixed oxide ion conductor, or a mixture of both.

The grains 12 adhered onto the outside surface of the skeleton 11 having the three dimensional network structure and the grains 12 filled in the pores 13 are constituted with an electron conducting material and/or a mixed oxide ion conducting material. These grains 12 can be constituted with the materials which have hitherto been used for the fuel electrode or the air electrode.

As the material for the adhered grains in the fuel electrode, there can be used at least one selected from Ni, Co and $Ce_{1-m}C_mO_2$ (C is one or more of Sm, Gd, Y and Ca; m = 0 to 0.4). Among these, $Ce_{1-m}C_mO_2$ ($CeO_2$ when m = 0) is a mixed oxide ion conductor, and the metals are of course electron conductors. Preferable is a mixture of one metal (preferably Ni), selected from Ni and Co, and $Ce_{1-m}C_mO_2$.

The material for the adhered grains in the air electrode includes an electron conducting material or at least one material selected from the materials based on $LaMnO_3$, $LaCoO_3$, $SmCoO_3$ and the $PrCoO_3$ which are mixed oxide ion conducting materials. In this connection, for example, the $LaMnO_3$ based material includes a material in which La or Mn is partially replaced with other metals, and this is also the case for the other materials. For example, a hitherto known material in which La is partially replaced with Sr and/or Ca can be used.

The electrode of a solid oxide fuel cell is used in the form in which the electrode is integrated with the solid electrolyte layer. The electrode involved in the present invention which is formed by adhering the grains made of an electrode material to a porous sintered compact having a three dimensional network structure can be integrated with the electrolyte material by the thermocompression bonding before sintering or by the thermal spray of the electrolyte material to the sintered electrode.

In order to overcome or minimize the thermal strain in the electrode/electrolyte interface which strain provokes problems when the electrode is integrated with the solid electrolyte, the skeleton of the electrode may be made of a material the same or the same in type as the material of the solid electrolyte layer. Materials of the same type intends to mean and represent materials which are the same in main component and crystal structure.

For example, when the solid electrolyte is a YSZ, the skeleton of the electrode can be constituted with the YSZ. Additionally, when the solid electrolyte is made of an oxide ion conductor represented by the above described formula (1) (namely, the z value is 0.15 or less), the skeleton of the electrode can be constituted with the same oxide ion conductor or a material represented by the above described formula (1) with the z value larger than 0.15 which is the same type of mixed oxide ion conductor. Additionally, the compounds represented by the above described formula (2) can be used satisfactorily as the skeleton of the electrode materials because the compounds are of the same type in view of the fact that the compounds are among the rare earth gallates having the perovskite structure.

As described above, when the material of the skeleton which constitutes the major portion of the electrode is made to be the same or the same in type as the material of the solid electrolyte, the problem of the thermal strain in the electrode/electrolyte interface can be eliminated or remarkably alleviated. However, in the present invention, the skeleton of the electrode is a three dimensional network structure having a large surface area, and this structure displays an effect for alleviating the thermal shock and the thermal strain; accordingly, even if the electrolyte and the skeleton of the electrode are different in the material type, the fracture caused by the difference in thermal expansion coefficient between the electrolyte and the skeleton hardly occurs.

Now, on the basis of FIG. 2, a detailed description will be made hereinafter with respect to the configuration of a planar type solid oxide fuel cell to which the present invention is applied.

In FIG. 2, reference numeral 1 designates a fuel cell stack, which has a structure in which an electrochemically active cell 5 in which a fuel electrode layer 3 and an air electrode layer 4 are arranged respectively on both surfaces of a solid electrolyte layer 2, a fuel electrode current collector 6 arranged outside the fuel electrode layer 3, an air electrode current collector 7 arranged outside the air electrode layer 4, and the separators 8 arranged respectively outside the current collectors 6 and 7 are laminated in this order.

Additionally, respectively on both sides of the fuel cell stack 1, a manifold 25 for fuel for supplying fuel gas through connecting pipes 23 to fuel paths 21 in the respective separators 8 and a manifold 26 for oxidant for supplying oxidant gas through connecting pipes 24 to oxidant paths 22 in the respective separators 8 are arranged so as to be extended along the stacking direction with respect to the electrochemically active cell 5.

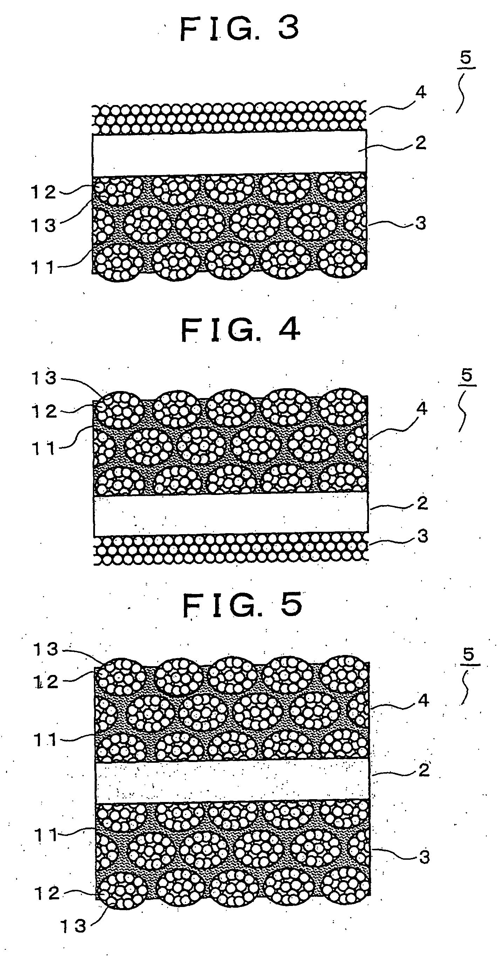

FIGS. 3 to 5 illustrate different examples of the internal structures of the electrochemically active cell 5 portion of the solid oxide cell shown in FIG. 2. In these figures, reference numeral 4 denotes an air electrode, reference numeral 2 denotes a solid electrolyte layer, and reference numeral 3 denotes a fuel electrode.

Here, FIG. 3 shows an example in which the electrode of the present invention is used as the fuel electrode 3, FIG. 4 shows an example in which the electrode of the present invention is used as the air electrode 4, and FIG. 5 shows an example in which the electrode of the present invention is applied to the fuel electrode 3 and the air electrode 4.

In any of these configurations, the electrode properties are drastically improved, and a solid oxide fuel cell can be actualized in which the thermal shock and the thermal strain are markedly reduced.

Industrial Applicability

As described above, the electrode of a solid oxide fuel cell involved in the present invention has a configuration in which grains made of an electrode material are adhered to the surface of a porous sintered compact (skeleton) having a three dimensional network structure with a large specific surface area, and the grains made of the electrode material are filled inside the voids of the porous sintered compact and baked inside the voids; accordingly, the three-phase boundary length is drastically increased, and hence the electrode properties are markedly improved.

Additionally, the porous skeleton of the electrode has an extremely large specific surface area, and hence there acts an effect for alleviating the thermal shock and the thermal strain, so that generation of the breakdown of the electrode caused by the difference in thermal expansion coefficient between the skeleton and the electrolyte can be prevented.

Moreover, the porous skeleton of the electrode can be formed using the same material as that for the electrolyte, and hence the difference in thermal expansion coefficient between the skeleton and the electrolyte vanishes, so that the generation of the thermal strain itself can be eliminated.

By using such an electrode as described above, there can be actualized a solid oxide fuel cell in which the power output property and the reliability are drastically improved.

**Claims**

1.  An electrode of a solid oxide fuel cell wherein:

    the electrode comprises a skeleton constituted of aporous sintered compact having a three dimensional network structure, the porous sintered compact being made of an oxide ion conducting material and/or a mixed oxide ion conducting material;
    grains made of an electron conducting material and/or a mixed oxide ion conducting material are adhered onto the surface of said skeleton; and
    said grains are baked inside the voids of said porous sintered compact under the conditions such that the grains are filled inside the voids.

2.  The electrode of a solid oxide fuel cell according to claim 1, wherein said porous sintered compact is made of a material which has a composition represented by the following formula:

$$Ln_{1-x}A_xGa_{1-y-z}Bl_yB2_zO_3 \qquad (1)$$

    where

    Ln = one or more of La, Ce, Pr, Nd and Sm;
    A = one or more of Sr, Ca and Ba;
    B1 = one or more of Mg, Al and In;
    B2 = one or more of Co, Fe, Ni and Cu;
    $x = 0.05$ to $0.3$;
    $y = 0.025$ to $0.29$;
    $z = 0.01$ to $0.15$; and
    $y + z \leq 0.3$.

3.  The electrode of a solid oxide fuel cell according to claim 1, wherein said porous sintered compact is made of a yttria stabilized zirconia.

4.  The electrode of a solid oxide fuel cell according to claim 1, wherein said porous sintered compact is made of a material having a composition represented by the following formula, and the electrode is an air electrode:

$$Ln_{1-x}A_xGa_{1-y-z}Bl_yB2_zO_3$$

    where

    Ln = one or more of La, Ce, Pr, Nd and Sm;
    A = one or more of Sr, Ca and Ba;
    B1 = one or more of Mg, Al and In;
    B2 = one or more of Co, Fe, Ni and Cu;
    $x = 0.05$ to $0.3$;

$y = 0$ to 0.29;
$0.15 < z \leq 0.3$; and
$y + z \leq 0.3$.

5. The electrode of a solid oxide fuel cell according to claim 1, wherein said porous sintered compact is made of a material having a composition represented by the following formula, and the electrode is an air electrode:

$$A'_{1-x'}Ca_{x'}Ga_{1-y'}B'_{y'}O_3$$

where

A' = one or more lanthanoid metals each having the 8 coordination ionic radius of the trivalent ion ranging from 1.05 to 1.15 Å;
B' = one or more of Co, Fe, Ni and Cu;
$x' = 0.05$ to 0.3; and
$y' = 0.05$ to 0.3.

6. The electrode of a solid oxide fuel cell according to any of claims 1 to 3, wherein said grains comprise at least one of Ni, Co, $Ce_{1-m}C_mO_2$ (C is one or more of Sm, Gd, Y and Ca; $m = 0$ to 0.4), and the electrode is a fuel electrode.

7. The electrode of a solid oxide fuel cell according to any of claims 1 to 5, wherein said grains are made of at least one selected from a group of the materials based on $LaMnO_3$, $LaCoO_3$, $SmCoO_3$ and a $PrCoO_3$, and the electrode is an air electrode.

8. An electrode/electrolyte laminate for a solid oxide fuel cell, wherein the electrode according to any of claims 1 to 7 is integrally formed on one surface of an oxide ion conducting, dense solid electrolyte layer.

9. An electrode/electrolyte laminate for a solid oxide fuel cell, wherein the electrode according to any of claims 1 to 3 is integrally formed on both surfaces of an oxide ion conducting, dense solid electrolyte layer.

10. An electrode/electrolyte laminate for a solid oxide fuel cell, wherein the electrode according to any of claims 1 to 5 or claim 7 is integrally formed on one surface of an oxide ion conducting, dense solid electrolyte layer; and the electrode according to any of claims 1 to 3 or claim 6 is integrally formed on the other surface of the oxide ion conducting, dense solid electrolyte layer.

11. The electrode/electrolyte laminate for a solid oxide fuel cell according to any of claims 8 to 10, wherein the skeleton of the electrode and the solid electrolyte layer are made of the same material or the same type of material.

12. A solid oxide fuel cell, wherein the fuel cell comprises an air electrode and/or a fuel electrode each consisting of the electrode according to any of claims 1 to 7.

13. A solid oxide fuel cell, wherein the fuel cell comprises the electrode/electrolyte laminate according to any of claims 8 to 11.

# FIG. 1

# FIG. 2

EP 1 482 584 A1

# F I G. 3

# F I G. 4

# F I G. 5

## INTERNATIONAL SEARCH REPORT

| International application No. |
|---|
| PCT/JP03/02201 |

**A. CLASSIFICATION OF SUBJECT MATTER**
Int.Cl$^7$ H01M4/86, H01M8/12

According to International Patent Classification (IPC) or to both national classification and IPC

**B. FIELDS SEARCHED**

Minimum documentation searched (classification system followed by classification symbols)
Int.Cl$^7$ H01M4/86, H01M8/12

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | JP 8-273675 A (Kyocera Corp.), 18 October, 1996 (18.10.96), | 1,3,6,8-9, 11-13 |
| Y | Claims; Fig. 2 (Family: none) | 2,4,5,7,10 |
| X | JP 7-22056 A (Fuji Electric Co., Ltd.), 24 January, 1995 (24.01.95), | 1,3,6,8-9, 11-13 |
| Y | Full text (Family: none) | 2,4,5,7,10 |
| Y | DE 19963882 A1 (Mitsubishi Materials Corp.), 14 September, 2000 (14.09.00), Full text & JP 2000-200614 A Full text | 2,4,5,7,10 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>03 April, 2003 (03.04.03) | Date of mailing of the international search report<br>15 April, 2003 (15.04.03) |
| Name and mailing address of the ISA/<br>Japanese Patent Office | Authorized officer |
| Facsimile No. | Telephone No. |

Form PCT/ISA/210 (second sheet) (July 1998)